Europäisches Patentamt

European Patent Office

Office européen des brevets

(11) Veröffentlichungsnummer: **0 243 368**
**B1**

(12) **EUROPÄISCHE PATENTSCHRIFT**

(45) Veröffentlichungstag der Patentschrift:
18.10.89

(51) Int. Cl.⁴: **B 01 D 53/34**

(21) Anmeldenummer: 86901005.8

(22) Anmeldetag: 27.01.86

(86) Internationale Anmeldenummer:
PCT/AT 86/00010

(87) Internationale Veröffentlichungsnummer:
WO 86/04259 (31.07.86 Gazette 86/17)

(54) **VERFAHREN ZUR REDUZIERUNG DER EMISSIONSWERTE VON INDUSTRIELLEN ABGASEN UND INDUSTRIELLER ABLUFT.**

(30) Priorität: 28.01.85 AT 216/85

(43) Veröffentlichungstag der Anmeldung:
04.11.87 Patentblatt 87/45

(45) Bekanntmachung des Hinweises auf die Patenterteilung:
18.10.89 Patentblatt 89/42

(84) Benannte Vertragsstaaten:
BE CH DE FR GB IT LI LU NL SE

(56) Entgegenhaltungen:
EP-A- 0 016 290
FR-A- 2 106 256

Chemical Abstracts, Band 83, Nr. 24, 15. Dezember 1975,
Columbus, Ohio (US) siehe Seite 275,
Zusammenfassung 197565f

(73) Patentinhaber: ELIN-UNION Aktiengesellschaft für elektrische Industrie, Penzinger Strasse 76, A-1141 Wien (AT)

(72) Erfinder: VYTLACIL, Richard, Donaustrasse 110/10, A-2346 Maria Enzersdorf/Südstadt (AT)

(74) Vertreter: Krause, Peter, Penzinger Strasse 76, A-1141 Wien (AT)

# Beschreibung

Die Erfindung betrifft ein Verfahren zur Reduzierung der Emissionswerte von industriellen Abgasen und industrieller Abluft.

Wenn schwefelreiche Brennstoffe, meist sind dies Kohlen oder Schweröl, verbrannt werden, ist es aus Umweltschutzgründen erforderlich, die bei der Verbrennung anfallenden Rauchgase zu entschwefeln.

Es sind Rauchgasentschwefelungsanlagen bekannt, die mit Kalk- oder Kalkstein-Waschverfahren arbeiten und die ein Kalziumsulfit-/Sulfat-Gemisch oder aber Chemiegips als Nebenprodukt herstellen.

Nachteilig beim Anfall von Kalziumsulfit-/Sulfat-Gemisch ist, dass grosse Deponien errichtet werden müssen, wo die Gefahr besteht, dass das Grundwasser verunreinigt wird.

Auch der Anfall vom Chemiegips in grossen Mengen ist oft problematisch.

Alle herkömmlichen Rauchgasentschwefelungsverfahren weisen prinzipielle Nachteile auf.

So wird bei allen Nassverfahren, also auch bei den Kalk- und Kalksteinverfahren, das Rauchgas bei der Wäsche stark abgekühlt, so dass in den meisten Fällen eine Wiederaufheizung des gereinigten Rauchgases vor dem Einleiten in den Schornstein und der Abgabe in die Atmosphäre erforderlich ist. Die Kosten hiefür sind sehr hoch.

Ferner können sich Ablagerungen und Verstopfungen innerhalb der Anlage bilden, die durch Gips entstehen, der an Behälterwänden und an der inneren Oberfläche von Rohrleitungen auskristallisiert. Dadurch wird die Verfügbarkeit der Anlagen stark beeinträchtigt.

Darüber hinaus ist zur Ausschleusung von Chloriden, die aus dem Rauchgas stammen, ein Abwasserstrom erforderlich. Dieser Abwasserstrom ist je nach Verfahren sehr gross.

Es ist weiters ein Verfahren bekannt, das $SO_2$ herstellt. Dieses Verfahren arbeitet mit Natriumsulfit—Natriumhydrogensulfit. Das gewonnene $SO_2$-Rauchgas kann als flüssiges $SO_2$ in einer konventionellen Schwefelsäureanlage zu Schwefelsäure oder aber mit Hilfe eines Reduktionsgases zu Elementarschwefel verarbeitet werden.

Nachteilig ist bei diesem Verfahren, dass dabei nur der $SO_2$-Anteil des Rauchgases erfassbar ist.

Aus der FR-PS 2 106 256 ist ein Verfahren bekannt, das zur Entfernung von Verunreinigungen aus Gasströmen geeignet ist. Bei diesem bekannten Verfahren werden organische Bestandteile, wie Fette etc. aus dem Gasstrom entfernt.

Ferner ist aus CA83 = 197 565 f ein Verfahren bekannt, das als Oxidationsmittel Mangan-VII verwendet wird. Die thermostabilste Form ist das Mangan-IV-Oxid, besser bekannt als Braunstein, das jedoch nur über Schmelzaufschluss in Alkalioxiden wieder in Lösung zu bringen ist. Dieses Verfahren ist von der Energiebilanz und der Prozessführung bei Anwesenheit von Störelementen nicht durchführbar.

Schliesslich ist noch ein Verfahren bekannt, bei dem im ersten Schritt mit Kupfer die $SO_2$-Anteile des Rauchgases erfasst werden und in einem weiteren Schritt unter Zugabe von Ammoniak die $NO_X$-Anteile zu Stickstoff und Wasser katalytisch verbrannt werden. Nachteilig dabei sind die Kosten für die bei diesem Verfahren verwendeten Platin-Rhodium-Katalysatoren.

Aufgabe der Erfindung ist es, ein Verfahren der eingangs genannten Art zu schaffen, das einerseits die Nachteile der bekannten Verfahren vermeidet und mit dem andererseits die Umweltrentabilität derartig arbeitender Anlagen erhöht wird.

Das erfindungsgemässe Verfahren zur Reduzierung der Emissionswerte von industriellen Abgasen und Abluft ist dadurch gekennzeichnet, dass die im Abgas bzw. in der Abluft enthaltenen oxidierbaren Bestandteile, wobei unter anderem $SO_2$, $NO_X$ und organische Stoffe immer enthalten sind, mit Hilfe von schwefelsaurer Chromsäure und/oder Peroxi-Schwefelsäure oder Oxi-Säuren von Chlor oder deren Gemische zu Schwefelsäure bzw. Salpetersäure bzw. Kohlenwasserstoffe zu Kohlenstoff oxidiert werden und gleichzeitig alle sauren Komponenten des Rauchgases gelöst werden, wobei Chrom-VI zu Chrom-III bzw. Peroxi-Schwefelsäure zu Schwefelsäure bzw. Chlor-VII bis zu Chlor-I reduziert wird, und dass diese Waschlösung durch Destillation bzw. Extraktion aufbereitet wird. Das X bei $NO_X$ kann Zahlenwerte zwischen 0,5 und 2 einnehmen, wobei $NO_2$ identisch ist mit $N_2O_4$.

Mit diesem Verfahren gemäss der Erfindung ist es erstmals möglich, alle im Rauchgas enthaltenen gasförmigen Schadstoffe zu reduzieren. Es ist also mit diesem erfindungsgemässen Verfahren nicht nur möglich nur die $SO_2$-Anteile des Rauchgases oder nur die $NO_X$-Anteile zu reduzieren, sondern es werden alle Schadstoffe, wie beispielsweise $SO_2$, $NO_X$, HCl, HF aus dem Rauchgas entfernt.

Ein weiterer Vorteil des erfindungsgemässen Verfahrens ist darin zu sehen, dass keine Deponien notwendig sind. Darüber hinaus sind auch keine hohen Schornsteine mehr notwendig, da ja alle Schadstoffe aus dem Rauchgas entfernt werden.

Das praktisch vollständig entschwefelte und gleichzeitig von allen anderen Schadstoffen befreite Rauchgas stellt somit keine Umweltbelastung mehr dar.

Ein weiterer Vorteil dieses erfindungsgemässen Verfahrens ist die Gewinnung der Schadstoffe $SO_2$ und NO und $NO_2$ in Form von beispielsweise Schwefelsäure und Salpetersäure, wobei diese Produkte wieder wirtschaftlich verwertbar sind.

Gemäss einer Ausgestaltung der Erfindung wird das entstandene Chrom-III bzw. Schwefelsäure bzw. Chlor-I in einem Recycling-Prozess in einer elektrochemischen Zelle wieder zu Chrom-VI bzw. Peroxi-Schwefelsäure bzw. Chlor-VII oxidiert. Dadurch wird der Aufwand der Oxidationsmittel minimiert, da die einmal eingesetzte Menge im System verbleibt.

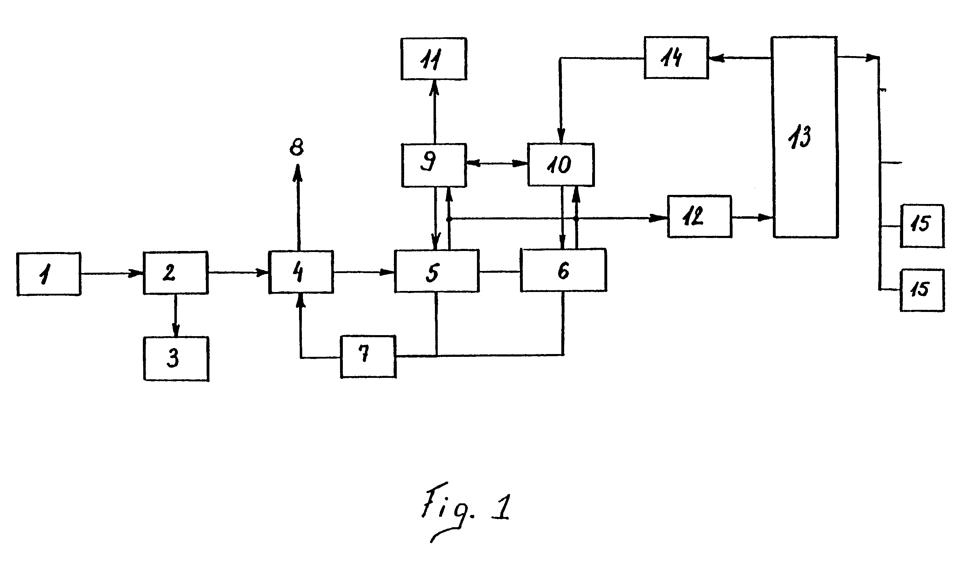

Das erfindungsgemässe Verfahren wird an Hand eines in der Zeichnung dargestellten Ausführungsbeispieles näher erläutert.

Gemäss der Fig. wird ausgehend vom Dampferzeuger 1 das Rauchgas im Hauptrauchkanal zur Entstäubung über einen Elektrofilter 2 geleitet. Die Flugasche wird an dieser Stelle ausgetragen und einer Schwermetallaufbereitung 3 zugeführt.

Vom Elektrofilter 2 wird das Rauchgas in einen Wärmetauscher 4, der ein Luft-Luft-Rekuperator sein kann, geleitet. In diesem Wärmetauscher 4 tauscht das Rauchgas mit dem gereinigten Gas im Gegenstrom die Wärme aus. Die Austrittstemperatur des Rauchgases am Ausgang des Wärmetauschers 4 soll zwischen 60 und 80° C liegen.

Vom Wärmetauscher 4 wird das Rauchgas in einen der Wäscher 5 bzw. 6 geleitet. In dem Wäscher 5 bzw. 6 werden alle im Rauchgas enthaltenen oxidierbaren Bestandteile mit Hilfe der Oxidationsmittel im Waschturm oxidiert. Gleichzeitig werden alle sauren Komponenten des Rauchgases in Lösung gebracht. Das gereinigte Rauchgas wird über einen Tröpfchenabscheider und ein Aerosolfilter 7 wieder in den Wärmetauscher 4 geleitet, auf ca. 100-140° C erwärmt und über den Schornstein 8 abgeleitet.

Jeder Wäscher 5 bzw. 6 weist einen Vorratsbehälter 9 bzw. 10 auf, in dem sich das Oxidationsmittel, in diesem Fall Chrom-VI, befindet. Ein Teil des aus dem Wäscher 5, 6 abfliessenden reduzierten Oxidationsmittels Chrom-III wird in einem Filter 11 filtriert und die Feststoffe ausgebracht.

Ferner wird die Chrom-III hältige Oxidations- und Absorptionslösung über ein weiteres Filter 12 einer Destillations- bzw. Extraktionskolonne 13 zugeführt. Der beispielsweise Chrom-III hältige schwefelsaure Rückstand wird danach einer elektrochemischen Zelle 14 zur Oxidation von Chrom-III zu Chrom-VI zugeleitet und anschliessend in die Vorratsbehälter 9, 10 zurückgeführt.

In der Destillationskolonne 13 wird die Waschlösung fraktioniert destilliert bzw. in der Extraktionskolonne 13 in einer Mischer-Trenner-Stufe durch flüssig-flüssig-Extraktion aufgetrennt. Die so erhaltenen Säuren werden in den Behältern 15 gesammelt.

## Patentansprüche

1. Verfahren zur Reduzierung der Emissionswerte von industriellen Abgasen und industrieller Abluft, dadurch gekennzeichnet, dass die im Abgas bzw. in der Abluft enthaltenen oxidierbaren Bestandteile, wobei unter anderem $SO_2$, $NO_X$ und organische Stoffe immer enthalten sind, mit Hilfe von schwefelsaurer Chromsäure und/oder Peroxi-Schwefelsäure oder Oxi-Säuren von Chlor oder deren Gemische zu Schwefelsäure bzw. Salpetersäure bzw. Kohlenwasserstoffe zu Kohlenstoff oxidiert werden und gleichzeitig alle sauren Komponenten des Rauchgases gelöst werden, wobei Chrom-VI zu Chrom-III bzw. Peroxi-Schwefelsäure zu Schwefelsäure bzw. Chlor-VII bis zu Chlor-I reduziert wird, und dass diese Waschlösung durch Destillation bzw. Extraktion aufbereitet wird.

2. Verfahren nach Anspruch 1, dadurch gekennzeichnet, dass das entstandene Chrom-III bzw. Schwefelsäure bzw. Chlor-I in einem Recycling-Prozess in einer elektrochemischen Zelle wieder zu Chrom-VI bzw. Peroxi-Schwefelsäure bzw. Chlor-VII oxidiert wird.

## Claims

1. Process for reducing the emission values of industrial exhaust gases and industrial exhaust air, characterised in that the oxidisable components contained in the exhaust gas or in the exhaust air, in which, inter alia, $SO_2$, $NO_X$ and organic materials are always present, are oxidised with the aid of sulphuric chromic acid and/or peroxy-sulphuric acid or oxy-acids of chlorine or mixtures thereof to give sulphuric acid or nitric acid, or hydrocarbons are oxidised to give carbon, and at the same time, all acid components of the exhaust gas are dissolved, wherein chromium VI is reduced to chromium III, or peroxy-sulphuric acid is reduced to sulphuric acid or chlorine VII is reduced to chlorine I, and in that this washing solution is processed by means of distillation or extraction.

2. Process according to claim 1, characterised in that the resulting chromium III or sulphuric acid or chlorine I is oxidised back to chromium VI or peroxy-sulphuric acid or chlorine VII in a recycling process in an electrochemical cell.

## Revendications

1. Procédé pour la réduction des indices d'émission de gaz d'échappement et d'air d'échappement industriels, caractérisé par le fait que les constituants oxydables contenus dans les gaz d'échappement ou dans l'air d'échappement, où, entre autres, $SO_2$, $NO_X$ et des substances organiques sont toujours compris, sont oxydés à l'aide d'acide sulfochromique et/ou d'acide peroxosulfurique ou d'oxacides de chlore ou leurs mélanges en acide sulfurique ou acide nitrique, ou les hydrocarbures, en carbone, et simultanément tous les composants acides du gaz de fumée sont dissous, le chrome VI étant réduit en chrome III, ou l'acide peroxosulfurique, en acide sulfurique, ou le chlore VII, en chlore I, et par le fait que cette solution de lavage est traitée par distillation ou extraction.

2. Procédé selon la revendication 1, caractérisé par le fait que le chrome III ou l'acide sulfurique ou le chlore I qui se forme est, dans un processus de recyclage dans une cellule électrochimique, oxydé à nouveau en chrome VI ou acide peroxosulfurique ou chlore VII.

Fig. 1